# EUROPÄISCHE PATENTSCHRIFT

(11) **EP 2 694 570 B1**
(45) Veröffentlichungstag und Bekanntmachung des Hinweises auf die Patenterteilung: **31.10.2018**
(21) Anmeldenummer: 12706278.4
(22) Anmeldetag: 02.03.2012
(51) Int. Cl.: C08G 65/00, C08K 5/00

(54) **POLYELEKTROLYTISCHES FLIESSMITTEL**
POLYELECTROLYTIC FLOW AGENT
AGENT D'ÉCOULEMENT POLYÉLECTROLYTIQUE

(30) Priorität: 08.04.2011 EP 11161688
(43) Veröffentlichungstag der Anmeldung: 12.02.2014
(73) Patentinhaber: BASF Construction Polymers GmbH, 83308 Trostberg (DE)
(72) Erfinder: DIERSCHKE, Frank, 55276 Oppenheim (DE); SCHINABECK, Michael, 83352 Altenmarkt (DE)
(74) Vertreter: BASF IP Association
(86) Internationale Anmeldenummer: PCT/EP2012/053630
(87) Internationale Veröffentlichungsnummer: WO 2012/136425

(56) Entgegenhaltungen:
- WO-A1-2006/042709
- WO-A1-2007/071361
- WO-A1-2010/040611
- WO-A1-2010/040612
- WO-A1-2011/029711

## Beschreibung

Die vorliegende Erfindung betrifft eine Zusammensetzung enthaltend ein Salz aus einer Säure und einer Base, wobei die Säure definiert ist als ein Polykondensationsprodukt enthaltend (I) mindestens eine einen Aromaten oder Heteroaromaten und eine Polyetherseitenkette aufweisende Struktureinheit und (II) mindestens eine phosphatierte einen Aromaten oder Heteroaromaten aufweisende Struktureinheit und Polyethylenimin als Base, wobei die Molmasse des Polyethylenimins größer als 500 Dalton ist. Die Erfindung betrifft auch ein Verfahren zur Herstellung der Zusammensetzungen und Baustoffmischungen enthaltend die Zusammensetzungen. Ebenfalls betroffen sind die Verwendung der Zusammensetzungen als Zusatzmittel für wässrige Suspensionen von Bindemitteln basierend auf Calciumsulfat und die Verwendung der Zusammensetzungen als Zusatzmittel für wässrige Suspensionen von (latent)hydraulischen Bindemitteln.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, oder auf Calciumsulfat basierende Bindemittel wie Gips, Hemihydrat und/oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im erhärteten Baustoffkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren mit Polyethermakromonomeren hergestellt werden. Diese werden oft auch als Polycarboxylatether (PCE) bezeichnet.

Im Stand der Technik sind solche Fließmittel beispielsweise in der Patentanmeldung US2006/281885 beschrieben. Beim Bindemittel handelt es sich um Zement, Gips, Kalk, Anhydrit oder ein sonstiges Calciumsulfat-basiertes Bindemittel.

In der Patentanmeldung US2006/138277 A2 werden Polycarboxylatether zur Verflüssigung von Gips-Slurries eingesetzt, wobei die Wirksamkeit der Fliessmittel durch Modifizierer ausgewählt aus Zement, Kalk, Carbonaten und Silikaten verbessert wird.
In der WO 2006/042709 werden Polykondensationprodukte auf Basis einer aromatischen oder heteroaromatischen Verbindung (A) mit 5 bis 10 C-Atomen bzw. Heteroatomen mit mindestens einem Oxyethylen- oder Oxypropylen-Rest und einem Aldehyd (C) ausgewählt aus der Gruppe Formaldehyd, Glyoxylsäure und Benzaldehyd oder Mischungen davon beschrieben, welche im Vergleich zu den herkömmlich verwendeten Poykondensationsprodukten eine verbesserte verflüssigende Wirkung von anorganischen Bindemittel-Suspensionen, einschließlich Gips, bewirken und diesen Effekt über einen längeren Zeitraum aufrechterhalten ("slump Erhalt"). In einer besonderen Ausführungsform kann es sich hierbei auch um phosphatierte Polykondensationsprodukte handeln.

Die Patentanmeldung WO2010/040612 offenbart ebenfalls phosphatierte Polykondensationsprodukte, insbesondere ein Verfahren zu deren vereinfachter Herstellung in einem Eintopfverfahren, sowie die Verwendung als Zusatzmittel in einer Baustoffmischung. Bei der Baustoffmischung kann es sich neben hydraulischen Bindemitteln wie Zement auch um auf Calciumsulfat basierende Bindemittel (z.B. Gips) handeln. Die WO2010/040612 offenbart auch, dass Mittel zur Reduzierung des Formaldehydgehalts der Polykondensate wie Natriumbisulfit, Ethylenharnstoff und unter anderem auch Polyethylenimin eingesetzt werden können. Es sind keinerlei Beispiele für Mischungen aus Polykondensat und Polyethylenimin gegeben, auch nicht für deren eventuelle Wirksamkeit als Fliessmittel. Auch fehlen jegliche Angaben zur Molmasse des Polyethylenimins.

Den im Stand der Technik bekannten Fliessmitteln auf Basis Polycarboxylatether, als auch auf Basis phosphatierte Polykondensationprodukte ist das Problem gemeinsam, dass oft relativ hohe Dosierungen an Fliessmittel bezogen auf das jeweilige Bindemittel zum Einsatz kommen müssen, um eine ausreichende Verflüssigung zu erreichen. Es besteht also das Bedürfnis nach einer weiteren Verbesserung der Wirtschaftlichkeit der Fliessmittel. Auch haben gerade bei höheren Dosierungen, und insbesondere in Bindemittelsystemen basierend auf Calciumsulfalt, die derzeit im Stand der Technik bekannten Fliessmittel die Eigenschaft eine unerwünschte Verzögerung des Abbindens zu bewirken.
Als Aufgabe der vorliegenden Erfindung stellt sich also im Vergleich zum Stand der Technik eine Effizienzsteigerung, insbesondere gleiche Verflüssigungsleistung bei geringerer Dosierung zu erzielen und dabei das Problem einer Verzögerung des Abbindens zu vermeiden. Der wirtschaftliche Aspekt geringerer Kosten ist selbstverständlich auch bedeutsam.

Der Gegenstand der vorliegenden Erfindung ist in den Ansprüchen 1-9 definiert. Die Aufgabe wird gelöst durch eine Zusammensetzung enthaltend ein Salz aus einer Säure und einer Base, wobei die Säure definiert ist als ein Polykondensationsprodukt enthaltend
(I) mindestens eine einen Aromaten oder Heteroaromaten und eine Polyetherseitenkette aufweisende Struktureinheit und
(II) mindestens eine phosphatierte einen Aromaten oder Heteroaromaten aufweisende Struktureinheit und
Polyethylenimin als Base, wobei die Molmasse des Polyethylenimins größer als 500 Dalton ist, bevorzugt die Molmasse des Polyethylenimins bis zu 30.000 Dalton beträgt. Ebenso wird die Aufgabe gelöst durch ein Verfahren zur Herstellung der Zusammensetzungen, wobei in einem ersten Verfahrensschritt a) eine Reaktionsmischung enthaltend mindestens
(la) ein eine Polyetherseitenkette und einen Aromaten oder Heteroaromaten aufweisendes Monomer,
(IIa) mindestens eine phosphatierte einen Aromaten oder Heteroaromaten aufweisendes Monomer und
(IIIa) mindestens eine Ketoverbindung als Monomer der allgemeinen Strukturformel 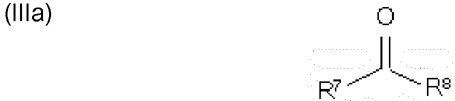
mit
R⁷ ist gleich oder verschieden und repräsentiert durch H, CH₃, COOH und/oder eine substituierte oder unsubstituierte aromatische oder heteroaromatische Verbindung mit 5 bis 10 C-Atomen, wobei die 5 bis 10 C-Atome bevorzugt im aromatischen Ringsystem sind, mit R⁸ ist gleich oder verschieden und repräsentiert durch H, CH₃, COOH und/oder eine substituierte oder unsubstituierte aromatische oder heteroaromatische Verbindung mit 5 bis 10 C-Atomen, wobei die 5 bis 10 C-Atome bevorzugt im aromatischen Ringsystem sind, unter sauren pH-Bedingungen, bevorzugt bei einem pH-Wert zwischen 2 und - 3, zum sauren Polykondensationsprodukt umgesetzt wird und gekennzeichnet dadurch, dass in einem zweiten Verfahrensschritt b) das so erhaltene saure Polykondensationsprodukt mit der Base Polyethylenimin vermischt wird.

Die Aufgabe wird auch gelöst durch Baustoffmischungen enthaltend die erfindungsgemäßen Zusammensetzungen und Bindemittel basierend auf Calciumsulfat und/oder (latent)hydraulischen Bindemitteln. Ebenso wird die Aufgabe gelöst durch die Verwendung der Zusammensetzungen als Zusatzmittel, bevorzugt Fliessmittel, für wässrige Suspensionen von Bindemitteln basierend auf Calciumsulfat und die Verwendung der Zusammensetzungen als Zusatzmittel, bevorzugt Fliessmittel für wässrige Suspensionen von (latent)hydraulischen Bindemitteln.

Die erfindungsgemäßen Zusammensetzungen stellen Salze dar aus einer Säure und der Base Polyethylenimin, wobei die Molmasse des Polyethylenimins größer als 500 Dalton ist, bevorzugt die Molmasse des Polyethylenimins bis zu 30.000 Dalton beträgt.

Als Säure kommen Polykondensationsprodukte zum Einsatz. Diese enthalten (I) mindestens eine einen Aromaten oder Heteroaromaten und eine Polyetherseitenkette aufweisende Struktureinheit. Bei den Aromaten oder Heteroaromaten handelt es sich typischerweise um gegebenenfalls substituierte Phenyl-, und/oder gegebenenfalls substituierte Naphthylstrukturen. Aromaten sind gegenüber Heteroaromaten bevorzugt und aufgrund der besseren Wasserlöslichkeit sind auf Phenylstrukturen basierende Aromaten gegenüber auf Naphthylstrukturen basierenden Aromaten bevorzugt. Typischerweise stellt die Polyetherseitenkette ein Polyalkylenoxid, bevorzugt ein Polyethylenoxid dar.

Typischerweise enthält das Polykondensat (I) wenigstens eine Struktureinheit, welche eine aromatische oder heteroaromatische Einheit mit einer oder mehreren Polyetherseitenkette(n) enthält, vorzugsweise eine oder mehrere Polyalkylenglykol - Seitenkette(n), besonders bevorzugt eine oder mehrere Polyethylenglykol - Seitenkette(n). Die aromatische oder heteroaromatische Einheit, welche eine oder mehrere Polyetherseitenkette(n) enthält, vorzugsweise eine oder mehrere Polyalkylenglykol - Seitenkette(n) enthält, wird vorzugsweise ausgewählt aus der Gruppe alkoxylierter, vorzugsweise ethoxylierter hydroxyfunktionalisierter Aromaten oder Heteroaromaten (zum Beispiel Aromaten ausgewählt aus Phenoxyethanol, Phenoxypropanol, 2-Alkoxyphenoxyethanole, 4-Alkoxyphenoxyethanole, 2-Alkylphenoxyethanole, 4-Alkylphenoxyethanole) und/oder alkoxylierte, vorzugsweise ethoxylierte aminofunktionalisierte Aromaten oder Heteroaromaten (zum Beispiel können die Aromaten gewählt werden aus N,N-(Dihydroxyethyl)anilin, N,-(Hydroxyethyl)anilin, N,N-(Dihydroxypropyl)anilin, N,-(Hydroxypropyl)anilin). Noch bevorzugter sind alkoxylierte Phenolderivative (zum Beispiel Phenoxyethanol oder Phenoxypropanol), am meisten bevorzugt sind alkoxylierte, besonders ethoxylierte Phenolderivate mit gewichtsmittleren Molekulargewichten M_{w} zwischen 300 Dalton und 10.000 Dalton (zum Beispiel Polyethylenglykol Monophenylether).

Weiterhin enthalten die Polykondensationsprodukte (II) mindestens eine phosphatierte einen Aromaten oder Heteroaromaten aufweisende Struktureinheit. Die Säureeigenschaften des Polykondensatonsprodukts basieren in erster Linie auf der Azidität der phosphatierten Gruppe. Die phosphatierte einen Aromaten oder Heteroaromaten aufweisende Struktureinheit wird vorzugsweise ausgewählt aus der Gruppe der alkoxylierten, hydroxyfunktionalisierten Aromaten oder Heteroaromaten (z.B. Phenoxyethanolphosphat, Polyethylenglycol monophenyletherphosphate) und/oder alkoxylierte amino-funktionalisierte Aromaten oder Heteroaromaten (z.B. N,N-(Dihydroxyethyl)anilin Diphosphat, N,N-(Dihydroxyethyl)anilinphosphat, N,-(Hydroxypropyl)anilinphosphat). Die phosphatierten Monomerverbindungen können in bekannter Weise durch Phosphatierung der entsprechenden Alkohole mit beispielsweise Polyphosphorsäure und/oder Phosphorpentoxid hergestellt werden.

Typischerweise enthält das Polykondensat (II) wenigstens eine phosphatierte Struktureinheit, welche eine aromatische oder heteroaromatische Einheit umfasst. Diese ist vorzugsweise ausgewählt aus der Gruppe alkoxylierter hydroxyfunktionalisierter Aromaten oder Heteroaromaten, welche mindestens eine Phophorsäureestergruppe aufweisen (zum Beispiel Phenoxyethanolphosphate, Polyethylenglykolmonophenyletherphosphate) und/oder alkoxylierte aminofunktionalisierte Aromaten oder Heteroaromaten, welche mindestens eine Phophorsäureestergruppe aufweisen (zum Beispiel N,N-(Dihydroxyethyl)anilin Diphosphat, N,N-(Dihydroxyethyl)anilinephosphat, N,-(Hydroxypropyl)anilin Phosphat). Noch bevorzugter sind alkoxylierte Phenole mit mindestens einer Phosphorsäureestergruppe, insbesondere Polyethylenglykolmonophenyl etherphosphate.

Häufig weist das erfindungsgemäße phosphatierte Polykondensationsprodukt ein gewichtsmittleres Molekulargewicht M_{w} von 4.000 Dalton bis 150.000 Dalton, vorzugsweise 10.000 bis 100.000 Dalton und besonders bevorzugt 15.000 bis 75.000 Dalton auf. Das gewichtsmittlere Molekulargewicht M_{w} wird mittels Größenausschlusschromatographie auf mittlere Molmasse und Umsatz analysiert (Säulenkombinationen: OH-Pak SB-G, OH-Pak SB 804 HQ und OH-Pak SB 802.5 HQ von Shodex, Japan; Elutionsmittel: 80 Vol.-% wässrige Lösung von HCO₂NH₄ (0,05 mol/l) und 20 Vol.-% Acetonitril; Injektionsvolumen 100 µl; Durchflussrate 0,5 ml/min). Die Kalibrierung zur Bestimmung der mittleren Molmasse erfolgte mit linearen Poly(ethylenoxid)- und Polyethylenglykol-Standards.

Weitere Details zur Herstellung der Polykondensationprodukte werden in den abhängigen Ansprüchen und der dazugehörigen Beschreibung offenbart.

Polyethylenimin, dessen Molmasse größer als 500 Dalton ist, spielt bei der Salzbildung die Rolle der Base. Überraschenderweise wurde gefunden, dass eine polymere Base mit einer gewissen Mindestanzahl an Ethyleniminwiederholungseinheiten besonders gute Anwendungseigenschaften, wie zum Beispiel verbesserte Dispergiereigenschaften aufweist. Insbesondere ist im Vergleich zu einem auf herkömmliche Weise hergestellten Polykondensationsprodukt des Stands der Technik, welches beispielsweise mit herkömmlichen Basen wie (Erd)alkalihydroxiden oder ähnlichen nichtpolymeren Basen neutralisiert wurde, bei gleicher Dosierung eine höhere Verflüssigung zu erzielen. Ebenfalls überraschenderweise bleibt ein Verzögerungseffekt in auf Calciumsulfat basierenden Bindemittelsystemen, insbesondere Gips, und auch zementären Bindemittelsystemen aus, obwohl bekanntlich Polyethylenimin als alleiniges Zusatzmittel zu den Bindemittelsystemen basierend auf Calciumsulfat und (latent)hydraulischen Bindern eine Verzögerung des Abbindens verursacht. Der überraschende Effekt der höheren Dispersibilität (Effekt als Fliessmittel) der erfindungsgemäßen Zusammensetzungen wird vermutlich darauf zurückzuführen sein, dass durch die bei der Salzbildung zwischen saurem Polykondensationsprodukt und dem basischen Polyethlyenimin ein Polyelektrolyt mit einem Polyanion (aus dem sauren Polykondensationsprodukt, insbesondere die phosphatierte Gruppe wirkt sauer) und einem Polykation (aus der Base Polyethylenimin) entsteht. Der Polyelektrolyt weist vermutlich eine andere Konformation der Polyetherseitenketten auf, welche in synergistischer Weise zusammen mit dem Polyethylenimin zu einer höheren Dispersibilität führen. Polykondensationsprodukte, welche beispielsweise mit einem (Erd)alkalihydroxid neutralisiert wurden sind dagegen einfache Polyanionen und weisen, wie experimentell gefunden wurde, eine nicht so gute Verflüssigungsleistung auf.

Überraschenderweise konnte eine verbesserte Dispergierleistung nicht mit anderen polymeren Basen wie Polyvinylamin oder Polyvinylformamid gefunden werden, auch nicht wenn das Polyvinylformamid mit Hilfe des sauren Polykondensationsproduktes hydrolysiert wurde.

Die erfindungsgemäßen Zusammensetzungen können als Zusatzmittel, bevorzugt Fliessmittel, für wässrige Suspensionen von Bindemitteln basierend auf Calciumsulfat eingesetzt werden. Dabei werden Dosierungen bezogen auf das auf Calciumsulfat basierende Bindemittel von bevorzugt 0.005 Gew. % bis 5.0 Gew. %, besonders bevorzugt von 0.01 Gew. % bis 1.0 Gew. % und insbesondere bevorzugt von 0.025 Gew. % bis 0.5 Gew. % eingesetzt. Die Dosierung der erfindungsgemäßen Zusammensetzungen bezieht sich dabei auf die Trockenmasse der erfindungsgemäßen Zusammensetzung bezogen auf die Summe der im auf Calciumsulfat basierenden Bindemittel enthaltenen Hydratstufen des Calciumsulfats.

Unter auf Calciumsulfat basierenden Bindemittelsystemen sollen im Zusammenhang mit der vorliegenden Erfindung die verschiedenen Hydratstufen mit oder auch ohne Kristallwasser verstanden werden. Das in der Natur vorkommende Gipsgestein ist Calciumsulfat-Dihydrat, die in der Natur vorkommende kristallwasserfreie Form des Calciumsulfats wird als Anhydrit bezeichnet. Neben den natürlichen Vorkommen ist Calciumsulfat auch als Nebenprodukt bestimmter technischer Prozesse bekannt und wird dann als synthetischer Gips bezeichnet. Ein Beispiel für solche technischen Prozesse ist die Rauchgasentschwefelung (REA-Gips). Weiterhin fällt synthetischer Gips auch bei der Phosphor- und Flußsäureherstellung an. Um Halbhydratformen (CaSO₄ ½ H₂O) zu erhalten, wird Gips (CaSO₄ 2H₂O) unter Abspaltung von Wasser kalziniert. Je nach Kalzinierungsmethode wird entweder alpha- oder beta Halbhydrat hergestellt. Beta Halbhydrat entsteht bei rascher Erhitzung in offenen Anlagen, wobei das Wasser fast plötzlich entweicht und Hohlräume hinterlässt. Alpha Halbhydrat bildet sich, wenn man Gips in geschlossenen Autoklaven entwässert. Die Kristallform ist dann dicht und folglich ist auch der Wasseranspruch für dieses Bindemittel deutlich geringer als für beta Halbhydrat.

Gipshalbhydrat rehydratisiert unter Zugabe von Wasser zu Dihydratkristallen. Üblicherweise vollzieht sich die Wasseranlagerung (Hydratation) von Gips innerhalb weniger Minuten bis einiger Stunden, was im Vergleich zur Hydratation von Zementen, die sich über mehrere Stunden/Tage erstreckt, einen deutlich verkürzten Verarbeitungszeitraum darstellt. Vor allem diese Eigenschaft lässt Gips als attraktive Alternative für Zement als hydraulisches Mittel in zahlreichen Anwendungsgebieten erscheinen, da ausgehärtete Gipsprodukte auf eine ausgeprägte Härte und Druckfestigkeit aufweisen.

Calciumsulfat-halbhydrat ist in der Lage, mindestens zwei Kristallformen auszubilden: α-calzinierter Gips wird überlicherweise in geschlossenen Autoklaven entwässert. Für zahlreiche Anwendungen wird der sogenannte β-calzinierte Gips ausgewählt, da er in ausreichenden Mengen und unter wirtschaftlich günstigen Bedingungen zugänglich ist. Diese Vorteile können aber dadurch aufgehoben werden, dass zu seiner Verarbeitung und insbesondere Verflüssigung größere Wassermengen benötigt werden.

Die Verarbeitung von Gips, aber auch von hydraulischen Bindemitteln, kann insbesondere durch die Zugabe von Dispergiermitteln verbessert werden, wofür insbesondere die erfindungsgemäßen Zusammensetzungen aufgrund ihrer hervorragenden verflüssigenden Eigenschaften geeignet sind.

Die erfindungsgemäßen Zusammensetzungen können als Zusatzmittel, bevorzugt Fliessmittel, für wässrige Suspensionen von (latent)hydraulischen Bindemitteln eingesetzt werden. Unter (latent)hydraulischen Bindemitteln werden zum einen hydraulische Bindemittel wie (Portland)zemente, Kalziumsulfoaluminatzemente und/oder Kalziumaluminatzemente verstanden und zum anderen auch Schlacke, vorzugsweise granulierte Hochofenschlacke, Flugasche, Silikamehl, Metakaolin, natürliche Pozzulane und/oder kalzinierter Ölschiefer. Die Dosierungen bezogen auf das (latent)hydraulische Bindemittel bzw. Bindemittelgemisch betragen bevorzugt 0.005 Gew. % bis 5.0 Gew. %, besonders bevorzugt 0.01 Gew. % bis 1.0 Gew. % und insbesondere bevorzugt 0.025 Gew. % bis 0.5 Gew. %. Die Dosierung der erfindungsgemäßen Zusammensetzungen bezieht sich dabei auf die Trockenmasse der erfindungsgemäßen Zusammensetzung bezogen auf die Summe der (latent)hydraulischen Bindemittel, insbesondere bevorzugt bezieht sich die Dosierung auf die Menge des Zements.

In einer bevorzugten Ausführungsform werden die Struktureinheiten (I) und (II) durch folgende allgemeine Formeln repräsentiert 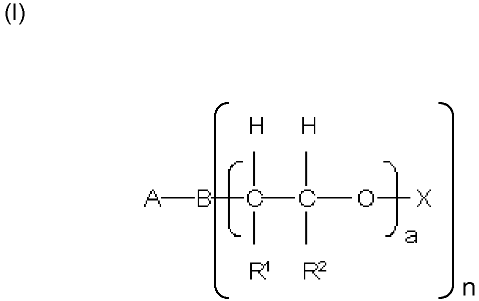 mit
A gleich oder verschieden sowie repräsentiert durch eine substituierte oder unsubstituierte aromatische oder heteroaromatische Verbindung mit 5 bis 10 C-Atomen, wobei die 5 bis 10 C-Atome bevorzugt im aromatischen Ringsystem sind,
mit
B gleich oder verschieden sowie repräsentiert durch N, NH oder O
mit
n = 2 falls B = N und n = 1 falls B = NH oder O
mit
R¹ und R² unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
mit
a gleich oder verschieden sowie repräsentiert durch eine ganze Zahl von 1 bis 300, bevorzugt 5 bis 280, insbesondere bevorzugt 10 bis 160,
mit X
gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H, bevorzugt ist H, 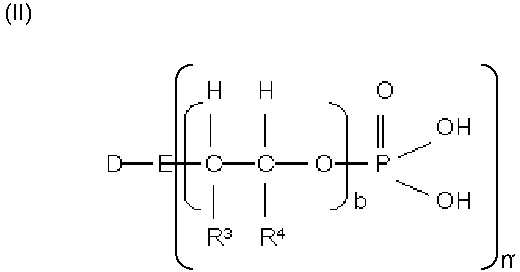 mit
D gleich oder verschieden sowie repräsentiert durch eine substituierte oder unsubstituierte aromatische oder heteroaromatische Verbindung mit 5 bis 10 C-Atomen, wobei die 5 bis 10 C-Atome bevorzugt im aromatischen Ringsystem sind,
mit
E gleich oder verschieden sowie repräsentiert durch N, NH oder O
mit
m = 2 falls E = N und m = 1 falls E = NH oder O
mit
R³ und R⁴ unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
mit b gleich oder verschieden sowie repräsentiert durch eine ganze Zahl von 0 bis 300, bevorzugt 1 bis 300, besonders bevorzugt 1 bis 10, insbesondere bevorzugt 1-5.

Die Gruppen A und D in den Struktureinheiten (I) und (II) des Polykondensationsproduktes werden meist durch Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl bevorzugt Phenyl repräsentiert, wobei A und D unabhängig voneinander gewählt werden können und auch jeweils aus einem Gemisch der genannten Verbindungen bestehen können. Die Gruppen B und E werden unabhängig voneinander bevorzugt durch O (Sauerstoff) repräsentiert.

Die Reste R¹, R², R³ und R⁴ können unabhängig voneinander gewählt werden und werden bevorzugt durch H, Methyl, Ethyl oder Phenyl, besonders bevorzugt durch H oder Methyl und insbesondere bevorzugt durch H repräsentiert.

Bevorzugt ist a in Struktureinheit (I) eine ganze Zahl von 1 bis 300, besonders bevorzugt 5 bis 280, insbesondere bevorzugt 10 bis 160 und b in Struktureinheit (II) eine ganze Zahl von 0 bis 300, besonders bevorzugt 1 bis 10 und insbesondere bevorzugt 1 bis 5. Die jeweiligen Reste, deren Länge durch a bzw. b definiert wird, können hierbei aus einheitlichen Baugruppen bestehen, es kann aber auch zweckmäßig sein, dass es sich um eine Mischung aus unterschiedlichen Baugruppen handelt. Weiterhin können die Reste der Struktureinheiten (I) bzw. (II) unabhängig voneinander jeweils die gleiche Kettenlänge besitzen, wobei a bzw. b jeweils durch eine Zahl repräsentiert wird. Es wird aber in der Regel zweckmäßig sein, dass es sich jeweils um Mischungen mit unterschiedlichen Kettenlängen handelt, so dass die Reste der Struktureinheiten im Polykondensationsprodukt für a und unabhängig für b unterschiedliche Zahlenwerte aufweisen.

Eine weitere bevorzugte Ausführungsform sind Zusammensetzungen, welche dadurch gekennzeichnet sind, dass die Säure eine weitere Struktureinheit (III) enthält, welche durch folgende Formel repräsentiert wird 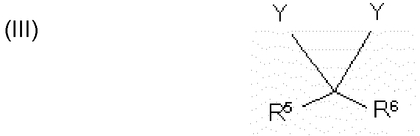 mit
Y unabhängig voneinander gleich oder verschieden und repräsentiert durch (I), (II), oder weitere Bestandteile des Polykondensationsproduktes mit
R⁵ gleich oder verschieden und repräsentiert durch H, CH₃, COOH oder eine substituierte oder unsubstituierte aromatische oder heteroaromatische Verbindung mit 5 bis 10 C-Atomen, wobei die 5 bis 10 C-Atome bevorzugt im aromatischen Ringsystem sind,
mit
R⁶ gleich oder verschieden und repräsentiert durch H, CH₃, COOH oder eine substituierte oder unsubstituierte aromatische oder heteroaromatische Verbindung mit 5 bis 10 C-Atomen, wobei die 5 bis 10 C-Atome bevorzugt im aromatischen Ringsystem sind.

Hierbei sind bevorzugt R⁵ und R⁶ in Struktureinheit (III) unabhängig voneinander gleich oder verschieden und werden durch H, COOH und/oder Methyl repräsentiert. Besonders bevorzugt ist H.

Bevorzugt sind Zusammensetzungen welche dadurch gekennzeichnet sind, dass das Molverhältnis der Struktureinheiten [(I) + (II)] : (III) 1 : 0,8 bis 3 beträgt.

Bevorzugt sind Zusammensetzungen welche dadurch gekennzeichnet sind, dass das Molverhältnis der Struktureinheiten (I) : (II) 1 : 10 bis 10 : 1 beträgt, besonders bevorzugt 1 : 6 bis 1 : 1.

Bevorzugt liegt das erfindungsgemäße phosphatierte Polykondensationsprodukt in wässriger Lösung vor, die 2 bis 90 Gew.-% Wasser und 98 bis 10 Gew.-% gelöste Trockenmasse, bevorzugt 40 bis 80 Gew.-% Wasser und 60 bis 20 Gew.-% gelöste Trockenmasse, besonders bevorzugt 45 bis 75 Gew.-% Wasser und 55 bis 25 Gew.-% gelöste Trockenmasse enthält. Die Trockenmasse besteht dann im Wesentlichen aus dem wasserfreien phosphatierten Polykondensationsprodukt, wobei aber auch vorteilhaft weitere Komponenten wie Entschäumer und andere Hilfsmittel enthalten sein können.

Bevorzugt sind Zusammensetzungen, dadurch gekennzeichnet, dass die Molmasse der Base Polyethylenimin 800 bis 30.000 Dalton, bevorzugt 1.200 bis 26.000 Dalton beträgt. In diesem Molmassenbereich des Polyethylenimins sind die Effekte bezüglich verbesserter Dispergierfähigkeit besonders stark ausgeprägt, wie in den Beispielen gezeigt wird.

Die erfindungsgemäßen Zusammensetzungen enthalten ein Salz aus dem sauren Polykondensationsprodukt und der Base Polyethylenimin, wobei die Molmasse des Polyethylenimins größer als 500 Dalton ist. Neben dem genannten Salz kann auch ein Überschuß an Polyethylenimin oder ein Überschuß an saurem Polykondensationsprodukt vorliegen. Die Massenverhältnisse von Säure und Base sind also nicht besonders beschränkt. Das bevorzugte Massenverhältnis des sauren Polykondensationsproduktes zur Base Polyethylenimin kann auch von der mineralogischen Zusammensetzung des verwendeten Bindemittels abhängen. Es ist bekannt, dass insbesondere wasserquellbare Tone (wie z.B. die Mehrschicht-Tonminerale), welche im Bindemittel vorhanden sein können, zu einem Anstieg des Wasserbedarfs der Bindemittelsuspension und zu einem Verlust der Wirksamkeit von Dispergiermitteln führen können. Insbesondere ist dies bei Dispergiermitteln mit Polyether-Seitenketten der Fall. Bei Vorhandensein, bzw. bei höheren Anteilen dieser wasser-quellbaren Tone hat es sich als vorteilhaft erwiesen mehr Polyethylenimin einzusetzen, da dieses dann die Tonpartikel dispergiert und/oder durch Blockierung von Oberflächenstellen auf den Tonpartikeln die unerwünschte Adsorption des Dispergiermittels verhindert ("Polyethylenimin als Opfersubstanz"). Dadurch wird eine Steigerung der Verflüssigungsleistung erreicht.

Bevorzugt sind Zusammensetzungen, wobei das Massenverhältnis des sauren Polykondensationsprodukts zur Base Polyethylenimin von 1 : 1 bis 1000 : 1 beträgt, bevorzugt von 4 : 1 bis 100 : 1, insbesondere bevorzugt von 7 : 1 bis 20 : 1 beträgt.
Dabei wird das vorstehend genannte Massenverhältnis stark von der Struktur des sauren Polykondensationsprodukts abhängen, bei einem hohen Anteil von phosphatierten Struktureinheiten im Polykondensationsprodukt wird es erforderlich sein, mehr Polyethylenimin einzusetzen und umgekehrt. Die betreffenden bevorzugten Bereiche sind vorstehend als Massenverhältnis angegeben und im Einzelfall durch entsprechende Versuche für den Fachmann relativ leicht auszutesten und gegebenenfalls weiter zu optimieren. Ein hoher Anteil des Polyethylenimins an den Basen ermöglicht die vorteilhafte Reduktion der Menge an Alkalimetallen im Dispergiermittel. Durch das Dispergiermittel werden in die Baustoffmischung im Allgemeinen auch Alkalimetalle eingebracht. Bekanntermaßen können Alkalimetalle die Eigenschaften der Baustoffmischung beim Abbinden durch die Bildung von leicht wasserlöslichen Alkalisalzen negativ beeinflussen und so z.B. bei Gipskartonplatten die Haftung des Kartons, insbesondere unter feuchten Bedingungen, auf dem Gipskern verringern.

Besonders bevorzugt sind Zusammensetzungen deren pH-Bereich in wässriger verdünnter Lösung bei 20 °C am Ende der Säure - Base Reaktion zwischen saurem Polykondensationsprodukt und erfindungsgemäßem Polyethylenimin zwischen 4 und 10, bevorzugt, 6 und 9 beträgt. Das Polykondensat, welches durch Polymerisation in Anwesenheit stark saurer Katalysatoren wie zum Beispiel Schwefelsäure, Methansulfonsäure und/oder para-Tolulsulfonsäure weist im allgemeinen vor der Säure-Base Reaktion einen entsprechend stark sauren pH-Wert auf, üblicherweise im Bereich kleiner als 1.

Bevorzugt sind Zusammensetzungen, dadurch gekennzeichnet, dass neben der Base Polyethylenimin noch weitere Basen vorliegen können, wobei bevorzugt der Anteil des Polyethylenimins an den Basen größer als 25 Gew.-% ist, besonders bevorzugt größer als 50 Gew.-% ist. Als weitere Basen sind beispielsweise (Erd)alkalihydroxide und/oder (Erd)alkalicarbonate möglich. Besonders bevorzugt ist Natriumhydroxid. Es können aber auch übliche Basen wie beispielsweise Amine zum Einsatz kommen. Eine teilweise Verwendung billigerer Basen als Polyethylenimin ist besonders aus wirtschaftlichen Gründen vorteilhaft. Falls weniger als 25 Gew. % Polyethylenimin eingesetzt werden, wird der Vorteil der Base Polyethylenimin z. B. bezüglich geringerer Dosierung relativ gering ausfallen.

Die Erfindung betrifft auch ein Verfahren zur Herstellung einer Zusammensetzung gemäß einer der bevorzugten Ausführungsformen, wobei in einem ersten Verfahrensschritt a) eine Reaktionsmischung enthaltend mindestens
(la) ein eine Polyetherseitenkette und einen Aromaten oder Heteroaromaten aufweisendes Monomer,
(IIa) mindestens eine phosphatierte einen Aromaten oder Heteroaromaten aufweisendes Monomer und
(IIIa) mindestens eine Ketoverbindung als Monomer der allgemeinen Strukturformel 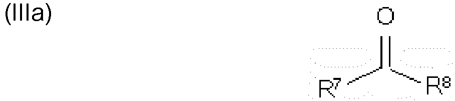 mit
   R⁷ gleich oder verschieden und repräsentiert durch H, CH₃, COOH und/oder eine substituierte oder unsubstituierte aromatische oder heteroaromatische Verbindung mit 5 bis 10 C-Atomen, wobei die 5 bis 10 C-Atome bevorzugt im aromatischen Ringsystem sind, mit R⁸ ist gleich oder verschieden und repräsentiert durch H, CH₃, COOH und/oder eine substituierte oder unsubstituierte aromatische oder heteroaromatische Verbindung mit 5 bis 10 C-Atomen, wobei die 5 bis 10 C-Atome bevorzugt im aromatischen Ringsystem sind, unter sauren pH-Bedingungen, bevorzugt bei einem pH-Wert zwischen 2 und - 3, zum sauren Polykondensationsprodukt umgesetzt wird und gekennzeichnet dadurch, dass in einem zweiten Verfahrensschritt b) das so erhaltene saure Polykondensationsprodukt mit der Base Polyethylenimin vermischt wird.

Vorzugsweise ist das Monomer, welches eine Ketogruppe aufweist, ein Monomer ausgewählt aus der Gruppe der Ketone, besonders bevorzugt ein Aldehyd, insbesondere bevorzugt Formaldehyd. Beispiele für Ketoverbindungen gemäß der allgemeinen Strukturformel (IIIa) sind Formaldehyd, Acetaldehyd, Aceton, Glyoxalsäure und/oder Benzaldehyd.

In der Regel wird die Polykondensation in Gegenwart eines sauren Katalysators durchgeführt, wobei es sich hierbei bevorzugt um Schwefelsäure, Methansulfonsäure, Para-Toluolsulfonsäure oder deren Mischungen handelt.

Die Polykondensation wird vorteilhaft bei einer Temperatur zwischen 20 und 140°C und einem Druck zwischen 1 und 10 bar durchführt. Insbesondere hat sich ein Temperaturbereich zwischen 80 und 110°C als zweckmäßig erwiesen. Die Reaktionsdauer kann je nach Temperatur, der chemischen Natur der eingesetzten Monomeren und dem angestrebten Vernetzungsgrad zwischen 0,1 und 24 Stunden betragen. Wenn der gewünschte Vernetzungsgrad erreicht ist, was beispielsweise auch über die Messung der Viskosität der Reaktionsmischung bestimmt werden kann, wird die Reaktionsmischung abgekühlt. Über Details des Verfahrensschritts b) wurde schon im vorstehenden Beschreibungstext berichtet.

Die Erfindung betrifft auch Baustoffmischungen enthaltend die erfindungsgemäßen Zusammensetzungen und Bindemittel basierend auf Calciumsulfat und/oder (latent)hydraulischen Bindemitteln. Die Gewichtsverhältnisse der erfindungsgemäßen Zusammensetzungen und der Bindemittel entsprechen jeweils den im vorstehenden Text genannten Dosierungen bezogen auf das Bindemittel (Calciumsulfat oder (latent)hydraulische Bindemittel bzw. Bindemittelgemische). Bevorzugt betragen diese also 0.005 Gew. % bis 5.0 Gew. %, besonders bevorzugt 0.01 Gew. % bis 1.0 Gew. % und insbesondere bevorzugt 0.025 Gew. % bis 0.5 Gew. %. Die Dosierung der erfindungsgemäßen Zusammensetzungen bezieht sich dabei auf die Summe der Trockenmasse(n) des oder der Bindemittel, insbesondere bevorzugt bezieht sich die Dosierung auf die Summe der Trockenmasse(n) der auf Calciumsulfat basierenden Bindemittel.

Die entsprechenden Baustoffmischungen sind herstellbar durch Einarbeitung der erfindungsgemäßen Zusammensetzungen, bevorzugt der erfindungsgemäßen Zusammensetzungen in fester Form, besonders bevorzugt in Pulverform, in den Baustoff. Dies geschieht in der Regel zusammen mit Bindemittel(n), Füllstoffen und Baustoffadditiven wie Dispersionspulvern, Wasserretentionsmitteln, Verdickern, Verzögerern, Beschleunigern, Netzmitteln und weiteren in der Bauchemie üblichen Additiven. Als wesentliche Komponente der Baustoffmischung sind dabei natürlich das oder die Bindemittel zu sehen. Die Bindemittel wurden schon vorstehend beschrieben.

Nach der Polykondensation der Monomere und dem Vermischen mit dem erfindungsgemäßen Polyethylenimin kann die erhaltene Zusammensetzung durch Trocknen in den festen Aggregatzustand, bzw. in Pulverform überführt werden, bevorzugt durch Sprühtrocknung. Bevorzugt ist zur Herstellung der Baustoffmischungen ein Verfahren in welchem die erfindungsgemäßen Zusammensetzungen (nach der Polykondensation der Monomere und dem Vermischen mit Polyethylenimin) ohne vorherige Trocknung eingesetzt werden. Besonders bevorzugt wird dann eine Schmelze mit einem Gesamtwassergehalt von kleiner als 10 Gew.-% mit einem Trägermaterial (beispielsweise anorganische Trägermaterialien wie Silikate) vermischt oder die erstarrte Schmelze gemahlen um die Zusammensetzung in die Pulverform zu überführen. Durch eventuelle Mahlung können die Pulvereigenschaften noch verbessert werden, insbesondere die Feinteiligkeit und Rieselfähigkeit der Pulver.

Die Erfindung betrifft auch die Verwendung der erfindungsgemäßen Zusammensetzungen als Zusatzmittel, bevorzugt Fliessmittel, für wässrige Suspensionen von Bindemitteln basierend auf Calciumsulfat, insbesondere für wässrige Suspensionen von Bindemitteln basierend auf Calciumsulfat zur Herstellung von Gipskartonplatten und Gipsbauplatten. Gipskartonplatten werden aus wässrigen Suspensionen von Bindemitteln basierend auf Calciumsulfat auf Hochgeschwindigkeitsproduktionsanlagen hergestellt. Eine effiziente Produktion der Gipskartonplatten sowie die Verbesserung der Eigenschaften von Gipskartonplatten erfordern somit eine gezielte Steuerung der Eigenschaften der Bindemittelsuspensionen. Die Verwendung der erfindungsgemäßen Zusammensetzungen als Additiv ermöglicht eine Verbesserung der Verarbeitbarkeit sowie eine Reduktion des Anmachwassers, was zu einem geringeren Trocknungsaufwand und zu höheren Festigkeiten der Platten führt. Dadurch wird eine Reduktion des Gipsanteils und somit eine Gewichtsreduktion möglich. Gipskartonplatten werden typischerweise hergestellt, indem die Calciumsulfatsuspension zwischen zwei Kartonlagen eingebracht und anschließend geformt wird, wobei die Kanten der außen liegenden Kartonlagen miteinander verbunden werden. Im Anschluss an die Formgebung lässt man die Suspension hydratisieren, schneidet die Platten in gewünschte Längen und entfernt das überschüssige Anmachwasser in einem Trocknungsschritt. Erfindungsgemäß kann die beanspruchte Zusammensetzung eingesetzt werden zusammen mit weiteren Additiven wie Beschleunigern, Verzögerern, Entstaubungsmitteln, Tensiden, Bioziden, Fasern zur Festigkeitssteigerung, Mitteln zur Verhinderung des Durchbiegens von Gipskartonplatten im ausgehärteten Zustand ("anti-sag agents"), organischen Bindemitteln wie Stärken und Schäumen, welche typischerweise zur Einführung von Luftporen zwecks Gewichtsreduzierung verwendet werden.

Die Erfindung betrifft auch die Verwendung der erfindungsgemäßen Zusammensetzungen als Zusatzmittel, bevorzugt Fliessmittel für wässrige Suspensionen von (latent)hydraulischen Bindemitteln.

### Beispiele

Folgende Polyethyleneimine unterschiedlichem Molekulargewichts wurden verwendet: Lupasol® HF (25000 Dalton, Verhältnis prim./sek./tert. Amine 1/1,1/0,7), Lupasol® G100 (5000 Dalton, Verhältnis prim./sek./tert. Amine 1/1/0,7), Lupasol® G20 (1300 Dalton, Verhältnis prim./sek./tert. Amine 1/0,9/0,6) und Lupasol® FG (800 Dalton, Verhältnis prim./sek./tert. Amine 1/0,9/0,5), alle erhältlich von der BASF SE Deutschland.

### Beispiel 1:

Die Synthese des Kondensates wird gemäß dem nachfolgenden Vergleichsbeispiel 1 durchgeführt, nur erfolgt die Neutralisation mittels 210 Teilen Lupasol® G100 auf einen pH-Wert von 6,5 - 7.

### Vergleichsbeispiel 1:

Ein beheizbarer, mit Rührer ausgestatteter Reaktor wird mit 400 Teilen Poly-(ethylenoxid)monophenylether (mittleres Molekulargewicht 2000 Dalton), 48 Teilen konzentrierter Methansulfonsäure, 20,5 Teilen Wasser, 87 Teilen 2-Phenoxyethanolphosphat und 19,6 Teilen Paraformaldehyd befüllt. Das Reaktionsgemisch wird unter Rühren 4 Stunden auf 115 °C erhitzt. Danach lässt man abkühlen, versetzt mit 450 Teilen Wasser und neutralisiert mit 104 Teilen 50%iger Natronlauge auf pH 6,5 - 7.

### Beispiel 2:

Die Synthese des Kondensates wird gemäß nachfolgendem Vergleichsbeispiel 2a durchgeführt, nur erfolgt die Neutralisation mittels
2a) 224 Teilen Lupasol® HF auf einen pH-Wert von 6,5 - 7.
2b) 224 Teilen Lupasol® G100 auf einen pH-Wert von 6,5 - 7.
2c) 224 Teilen Lupasol® G20 auf einen pH-Wert von 6,5 - 7.
2d) 111 Teilen Lupasol® FG auf einen pH-Wert von 6,5 - 7.
2e) 55 Teilen Lupasol® FG und 55 Teilen 50%iger Natronlauge (1:1 Feststoff) auf einen pH-Wert von 6,5 - 7.

### Vergleichsbeispiele 2 a, b, c:

Vergleichsbeispiel 2a: Ein beheizbarer, mit Rührer ausgestatteter Reaktor wird mit 600 Teilen Poly-(ethylenoxid)monophenylether (mittleres Molekulargewicht 5000 Dalton), 46 Teilen konzentrierter Methansulfonsäure, 20 Teilen Wasser, 105 Teilen 2-Phenoxyethanolphosphat und 19,9 Teilen Paraformaldehyd befüllt. Das Reaktionsgemisch wird unter Rühren 3,5 Stunden auf 115 °C erhitzt. Danach lässt man abkühlen, versetzt mit 550 Teilen Wasser und neutralisiert mit 111,4 Teilen 50%iger Natronlauge auf pH 6,5 - 7.

Vergleichsbeispiel 2b: Die Synthese des Kondensates wird gemäß Vergleichsbeispiel 2a durchgeführt, nur erfolgt die Neutralisation mittels 79,6 Teilen Triethylentetramin auf einen pH-Wert von 6,5 - 7.

Vergleichsbeispiel 2c: Die Synthese des Kondensates wird gemäß Vergleichsbeispiel 2a durchgeführt, nur erfolgt die Neutralisation mittels 91 Teilen Tetraethylenpentamin (> 95%) auf einen pH-Wert von 6,5 - 7.

### Beispiel 3:

Die Synthese des Kondensates wird gemäß nachfolgendem Vergleichsbeispiel 3 durchgeführt, nur erfolgt die Neutralisation mittels 110 Teilen Lupasol® FG auf einen pH-Wert von 6,5 - 7.

### Vergleichsbeispiel 3:

Ein beheizbarer, mit Rührer ausgestatteter Reaktor wird mit 580 Teilen Poly-(ethylenoxid)monophenylether (mittleres Molekulargewicht 5000 Dalton), 33,5 Teilen konzentrierter Schwefelsäure, 14 Teilen Wasser, 110 Teilen Oligoethylenglycolmonophenylether-Phosphorsäureester (mittleres Molekulargewicht 324 Dalton) und 64,1 Teilen 30%ige Formaldehydlösung befüllt. Das Reaktionsgemisch wird unter Rühren 6 Stunden auf 115 °C erhitzt. Danach lässt man abkühlen, versetzt mit 650 Teilen Wasser und neutralisiert mit 109,4 Teilen 50%iger Natronlauge auf pH-Wert 6,5 - 7.

### Beispiel 4:

Die Synthese des Kondensates wird gemäß Vergleichsbeispiel 2a durchgeführt, nur erfolgt die Neutralisation mittels Lupasol® G100
4a) auf einen pH-Wert von 3.
4b) auf einen pH-Wert von 5.
4c) auf einen pH-Wert von 9.
4d) auf einen pH-Wert von 11.

### Fließtests mit Calciumsulfat-Halbhydrat (beta)

Die erforderliche Menge des flüssigen Fließmittels (gemäß Synthesebeispielen 1 bis 3) wird in den Topf eines Hobart® Mischer eingewogen und die dem Wasser-Gips-Wert in den Tabellen 1 bis 6 entsprechende Menge Wasser zugegeben. Anschließend werden 400 g Gips zusammen mit dem Beschleuniger zugegeben, 15 sec eingeweicht und dann für 15 sec bei 285 U/min (Stufe II) gemischt. Nach 60 sec wird das Fließmaß mit einem Zylinder (Höhe: 10 cm, Durchmesser: 5 cm) bestimmt. Die Bestimmung der Versteifungszeit erfolgt mit dem Messerschnitt-Test.

Die Gipse haben jeweils folgende mineralogische Zusammensetzung:
Synthetischer Gips A:
   96,3 % Halbhydrat, 0,9 % Anhydrit, 0,3% Quarz, 0,5 % Muskovit, 2 % andere Verunreinigungen;
Synthetischer Gips B:
   95,6 % Halbhydrat, 2,6 % Anhydrit, 1,0% Quarz, 0,3 % Muskovit, 0,5 % andere Verunreinigungen;
Naturgips C:
   86,6 % Halbhydrat, 0,9 % Anhydrit, 1,5 % Calcit, 4,6 % Muskovit, 2,6 % Chlorite (ein Vierschicht-Tonmineral), 3,8 % andere Verunreinigungen.

**Tabelle 1: Verflüssigungsleistung und Versteifungszeit in dem synthetischen Gips A aus einer Rauchgasentschwefelungsanlage (beta-Halbhydrat)**

| Beispiel | Dosierung [Gew.-%] | Wasser-Gips-Wert | Beschleuniger [g] )* | Fließmaß [cm] | Versteifungszeit [min:s] |
|---|---|---|---|---|---|
| PCE 239 | 0,180 | 0,53 | 0,120 | 20,2 | 2:15 |
| Vergleichsbeispiel 1 | 0,190 | 0,53 | 0,105 | 21,0 | 2:05 |
| Beispiel 1 | 0,150 | 0,53 | 0,105 | 20,3 | 2:15 |
| PCE 239 | 0,080 | 0,63 | 0,100 | 20,2 | 2:10 |
| Vergleichsbeispiel 1 | 0,070 | 0,63 | 0,100 | 20,6 | 2:15 |
| Beispiel 1 | 0,060 | 0,63 | 0,100 | 20,8 | 2:15 |
| Vergleichsbeispiel 3 | 0,230 | 0,53 | 0,09 | 17,5 | 2:10 |
| Beispiel 3 | 0,185 | 0,53 | 0,08 | 20,0 | 2:15 |

| | | | | | |
|---|---|---|---|---|---|
| * fein gemahlenes CaSO₄-Dihydrat entsprechend der US 3573947 | | | | | |

**Tabelle 2: Verflüssigungsleistung und Versteifungszeit in dem synthetischen Gips B aus einer Rauchgasentschwefelungsanlage (beta-Halbhydrat)**

| Beispiel | Dosierung [Gew.-%] | Wasser-Gips-Wert | Beschleuniger [g])* | Fließmaß [cm] | Versteifungszeit [min:s] |
|---|---|---|---|---|---|
| BNS** | 0,200 | 0,74 | 0,590 | 21,0 | 2:20 |
| Vergleichsbeispiel 2a | 0,080 | 0,74 | 0,320 | 20,1 | 2:15 |
| Beispiel 2b | 0,065 | 0,74 | 0,340 | 20,5 | 2:20 |
| Vergleichsbeispiel 2a | 0,180 | 0,64 | 0,330 | 20,4 | 2:15 |
| Beispiel 2b | 0,130 | 0,64 | 0,330 | 21,0 | 2:15 |

| | | | | | |
|---|---|---|---|---|---|
| * fein gemahlenes CaSO₄-Dihydrat entsprechend der US 3573947 ** β-Naphthalinsulfonat (Fließmittel) | | | | | |

Wie aus Tabelle 1 und 2 deutlich wird, ermöglicht die Neutralisation mittels Polyethylenimin bei gleichem Fließmaß eine deutliche Absenkung der Dosiermenge der Polykondensate. Dabei ist die Verbesserung der Verflüssigungsleistung unabhängig von der Kondensatstruktur, wie die Beispiele 1 und 3 zeigen. Weiterhin wird deutlich, dass die Neutralisation mit Polyethylenimin keine negative Auswirkung auf die Versteifungszeit und somit auf das Abbindeverhalten des Gipses hat. Auch ist ersichtlich, dass die Verbesserung durch das Polyethylenimin unabhängig vom Wasser-zu-Gips Wert und von der Gipszusammensetzung ist. Zum Vergleich sind die dem Fachmann bekannten Fließmittel für Gipsanwendungen PCE 239, ein Polycarboxylatether erhältlich als Melflux® PCE 239 L/35% N.D. von der BASF Construction Chemicals GmbH, und BNS, ein Naphthalinsulphonat-Kondensat erhältlich als Meleret® 600L von der BASF Construction Chemicals GmbH, aufgeführt.

**Tabelle 3: Verflüssigungsleistung und Versteifungszeit in dem Naturgips C (beta-Halbhydrat)**

| Beispiel | Dosierung [Gew.-%] | Wasser-Gips-Wert | Beschleuniger [g])* | Fließmaß [cm] | Versteifungszeit [min:s] |
|---|---|---|---|---|---|
| Vergleichsbeispiel 2a | 0,170 | 0,65 | 0,270 | 16,8 | 2:00 |
| Beispiel 2a | 0,170 | 0,65 | 0,280 | 19,2 | 2:15 |
| Beispiel 2b | 0,170 | 0,65 | 0,290 | 19,8 | 2:05 |
| Beispiel 2c | 0,170 | 0,65 | 0,310 | 21,5 | 2:15 |
| Beispiel 2d | 0,170 | 0,65 | 0,310 | 20,3 | 2:15 |
| Beispiel 2e | 0,170 | 0,65 | 0,280 | 20,6 | 2:20 |

| | | | | | |
|---|---|---|---|---|---|
| * fein gemahlenes CaSO₄-Dihydrat entsprechend der US 3573947 | | | | | |

Aus Tabelle 3 wird ersichtlich, dass eine Verbesserung der Verflüssigungsleistung der Kondensate durch die Neutralisation mit Polyethyleniminen von unterschiedlichem Molekulargewicht bzw. Struktur möglich ist. Der Anwendungstest von Beispiel 2e zeigt zudem, dass auch eine "gemischte" Neutralisation mit Polyethylenimin und mineralischen Basen zu einer Verbesserung der Dispergierleistung der Kondensate führt.

**Tabelle 4: Verflüssigungsleistung und Versteifungszeit in dem synthetischen Gips A aus einer Rauchgasentschwefelungsanlage (beta-Halbhydrat)**

| Beispiel | Dosierung [Gew.-%] | Wasser-Gips-Wert | Beschleuniger [g])* | Fließmaß [cm] | Versteifungszeit [min:s] |
|---|---|---|---|---|---|
| Vergleichsbeispiel 2a | 0,160 | 0,53 | 0,125 | 20,4 | 2:10 |
| Beispiel 2b | 0,140 | 0,53 | 0,100 | 20,8 | 2:20 |
| Vergleichsbeispiel 2b | 0,180 | 0,53 | 0,130 | 20,3 | 2:20 |
| Vergleichsbeispiel 2c | 0,185 | 0,53 | 0,130 | 20,3 | 2:15 |

| | | | | | |
|---|---|---|---|---|---|
| * fein gemahlenes CaSO₄-Dihydrat entsprechend der US 3573947 | | | | | |

Die Vergleichsbeispiele 2b und 2c in Tabelle 4 verdeutlichen, dass durch eine Neutralisation mittels niedermolekularen, oligomeren Aminen eine deutlich schlechtere Leistungsfähigkeit als Fließmittel erhalten wird als durch die erfindungsgemäße Neutralisation mittels Polyethyleniminen mit einem Molekulargewicht größer als 500 Dalton. Auch wird etwas mehr Beschleuniger benötigt, um eine vergleichbare Versteifungszeit zu erhalten. Das Gegenion des Polykondensates sollte also eine polymere Struktur sein (bzw. ein Polykation sein), um eine Steigerung der Performance des Kondensates zu verursachen.

**Tabelle 5: Verflüssigungsleistung und Versteifungszeit in dem synthetischen Gips A aus einer Rauchgasentschwefelungsanlage (beta-Halbhydrat)**

| Beispiel | Dosierung [Gew.-%] | Wasser-Gips-Wert | Beschleuniger [g] )* | Fließmaß [cm] | Versteifungszeit [min:s] |
|---|---|---|---|---|---|
| Vergleichsbeispiel 2a | 0,185 | 0,57 | 0,060 | 20,4 | 2:20 |
| Beispiel 4a | 0,210 | 0,57 | 0,080 | 21,0 | 2:05 |
| Beispiel 4b | 0,185 | 0,57 | 0,070 | 20,4 | 2:10 |
| Beispiel 2b | 0,170 | 0,57 | 0,075 | 20,8 | 2:20 |
| Beispiel 4c | 0,160 | 0,57 | 0,080 | 20,2 | 2:15 |
| Beispiel 4d | 0,250 | 0,57 | 0,110 | 14,7 | 2:25 |

| | | | | | |
|---|---|---|---|---|---|
| * fein gemahlenes CaSO₄-Dihydrat entsprechend der US 3573947 | | | | | |

In Tabelle 5 ist die Verflüssigungsleistung von Kondensaten, die mit Lupasol® G100 auf verschiedene pH-Werte eingestellt worden sind, aufgeführt. Es ist ersichtlich, dass eine maximale Verbesserung der Dispergierwirkung der Kondensate bei einem neutralen bis leicht alkalischen pH-Wert erreicht wird (Beispiele 2b und 4c; pH 6.5 bis 7, bzw. 9). Ist der pH-Wert wie bei den Beispielen 4a und 4b niedriger (pH 3, bzw. 5) oder auch höher eingestellt (pH 11 in Beispiel 4d), tritt eine Verschlechterung der Leistungsfähigkeit als Verflüssiger ein.

Für die folgenden Versuche wurde das Polykondensat aus Vergleichsbeispiel 2a nach der Neutralisation mittels NaOH mit Lupasol® FG im Feststoffverhältnis 2 zu 3 (Vergleichsbeispiel 4a) und im Feststoffverhältnis 5 zu 4 (Vergleichsbeispiel 4b) versetzt. Die Ergebnisse in Tabelle 6 veranschaulichen, dass mit der Mischung aus dem Polykondensat-Natrium-Salz und Polyethylenimin (Vergleichsbeispiele 4a und 4b) keine Verbesserung der Verflüssigung erreicht wird. Es wird im Gegenteil nur eine stärkere Verzögerung im Vergleich mit dem ausschließlich mit Natronlage neutralisierten Produkt (Vergleichsbeispiel 2a) beobachtet.

**Tabelle 6: Verflüssigungsleistung und Versteifungszeit in dem Naturgips C (beta-Halbhydrat)**

| Beispiel | Dosierung Formulierung [Gew.-%] | Wasser-Gips-Wert | Beschleuniger [g] )* | Fließmaß [cm] | Versteifungszeit [min:s] |
|---|---|---|---|---|---|
| Vergleichsbeispiel 2a | 0,250 | 0,66 | 0,300 | 20,8 | 2:20 |
| Vergleichsbeispiel 4a | 0,250 | 0,66 | 0,400 | 24,0 | 5:00 |
| Vergleichsbeispiel 4b | 0,250 | 0,66 | 0,950 | 20,7 | 2:15 |

| | | | | | |
|---|---|---|---|---|---|
| * fein gemahlenes CaSO₄-Dihydrat entsprechend der US 3573947 | | | | | |

## Patentansprüche

1. Zusammensetzung enthaltend ein Salz aus einer Säure und einer Base, wobei die Säure definiert ist als ein
Polykondensationsprodukt enthaltend
(I) mindestens eine einen Aromaten oder Heteroaromaten und eine Polyetherseitenkette aufweisende Struktureinheit, wobei die Struktureinheiten (I) durch folgende allgemeine Formel repräsentiert wird 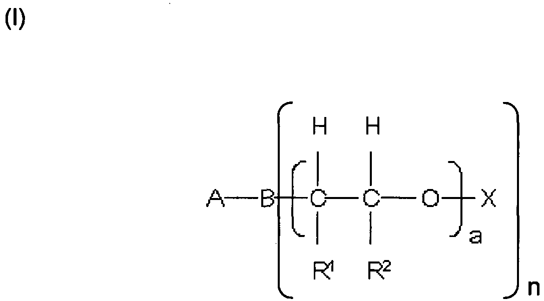 mit
A gleich oder verschieden sowie repräsentiert durch eine substituierte oder unsubstituierte aromatische oder heteroaromatische Verbindung mit 5 bis 10 C-Atomen, wobei die 5 bis 10 C-Atome bevorzugt im aromatischen Ringsystem sind,
mit
B gleich oder verschieden sowie repräsentiert durch N, NH oder O
mit
n = 2 falls B = N und n = 1 falls B = NH oder O
mit
R¹ und R² unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
mit
a gleich oder verschieden sowie repräsentiert durch eine ganze Zahl von 1 bis 300
mit X
gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
und
(II) mindestens eine phosphatierte einen Aromaten oder Heteroaromaten aufweisende Struktureinheit,
wobei die Struktureinheit (II) durch folgende allgemeine Formel repräsentiert wird 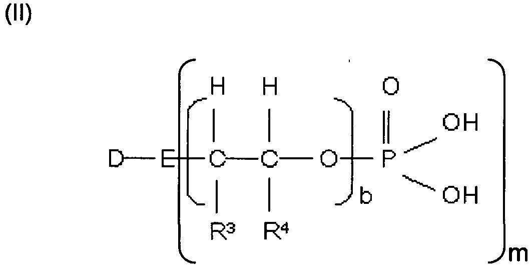 mit
D gleich oder verschieden sowie repräsentiert durch eine substituierte oder unsubstituierte aromatische oder heteroaromatische Verbindung mit 5 bis 10 C-Atomen, wobei die 5 bis 10 C-Atome bevorzugt im aromatischen Ringsystem sind,
mit
E gleich oder verschieden sowie repräsentiert durch N, NH oder O
mit
m = 2 falls E = N und m = 1 falls E = NH oder O
mit
R³ und R⁴ unabhängig voneinander gleich oder verschieden sowie repräsentiert durch einen verzweigten oder unverzweigten C₁- bis C₁₀-Alkylrest, C₅- bis C₈-Cycloalkylrest, Arylrest, Heteroarylrest oder H
mit b
gleich oder verschieden sowie repräsentiert durch eine ganze Zahl von 0 bis 300,
die Säure eine weitere Struktureinheit (III) enthält, welche durch folgende Formel repräsentiert wird 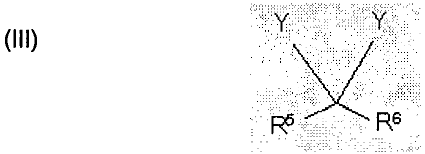 mit
Y unabhängig voneinander gleich oder verschieden und repräsentiert durch (I), (II), oder weitere Bestandteile des Polykondensationsproduktes
mit
R⁵ gleich oder verschieden und repräsentiert durch H, CH₃, COOH oder eine substituierte oder unsubstituierte aromatische oder heteroaromatische Verbindung mit 5 bis 10 C-Atomen, wobei die 5 bis 10 C-Atome bevorzugt im aromatischen Ringsystem sind,
mit
R⁶ gleich oder verschieden und repräsentiert durch H, CH₃, COOH oder eine substituierte oder unsubstituierte aromatische oder heteroaromatische Verbindung mit 5 bis 10 C-Atomen, wobei die 5 bis 10 C-Atome bevorzugt im aromatischen Ringsystem sind,
wobei das Molverhältnis der Struktureinheiten [(I) + (II)] : (III) 1 : 0,8 bis 3 beträgt, das Molverhältnis der Struktureinheiten (I) : (II) 1 : 10 bis 10: 1 beträgt;
und
Polyethylenimin als Base, wobei die Molmasse des Polyethylenimins größer als 500 Dalton ist und das Massenverhältnis des sauren Polykondensationsprodukts zur Base Polyethylenimin von 1 : 1 bis 1000 : 1 beträgt.

2. Zusammensetzung nach Anspruch 1, **dadurch gekennzeichnet, dass** R⁵ und R⁶ in Struktureinheit (III) unabhängig voneinander gleich oder verschieden durch H, COOH und/oder Methyl repräsentiert werden.

3. Zusammensetzung nach einem der Ansprüche 1 oder 2, **dadurch gekennzeichnet, dass** 2 bis 90 Gew.-% Wasser und 98 bis 10 Gew.-% gelöste Trockenmasse enthalten sind.

4. Zusammensetzung nach einem der Ansprüche 1 bis 3, **dadurch gekennzeichnet, dass** die Molmasse der Base Polyethylenimin 800 bis 30.000, bevorzugt 1.200 bis 26.000 g/mol beträgt.

5. Zusammensetzung nach einem der Ansprüche 1 bis 4, **dadurch gekennzeichnet, dass** neben der Base Polyethylenimin noch weitere Basen vorliegen können, wobei bevorzugt der Anteil des Polyethylenimins an den Basen größer als 25 Gew.-% ist, bevorzugt größer als 50 Gew.-% ist.

6. Verfahren zur Herstellung einer Zusammensetzung gemäß einem der Ansprüche 1 bis 5, wobei in einem ersten Verfahrensschritt a) eine Reaktionsmischung enthaltend mindestens
(la) ein eine Polyetherseitenkette und einen Aromaten oder Heteroaromaten aufweisendes Monomer,
(IIa) mindestens eine phosphatierte einen Aromaten oder Heteroaromaten aufweisendes Monomer und
(lila) mindestens eine Ketoverbindung als Monomer der allgemeinen Strukturformel 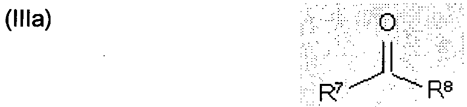 mit
R⁷ ist gleich oder verschieden und repräsentiert durch H, CH₃, COOH und/oder eine substituierte oder unsubstituierte aromatische oder heteroaromatische Verbindung mit 5 bis 10 C-Atomen, wobei die 5 bis 10 C-Atome bevorzugt im aromatischen Ringsystem sind, mit R⁸ ist gleich oder verschieden und repräsentiert durch H, CH₃, COOH und/oder eine substituierte oder unsubstituierte aromatische oder heteroaromatische Verbindung mit 5 bis 10 C-Atomen, wobei die 5 bis 10 C-Atome bevorzugt im aromatischen Ringsystem sind,
unter sauren pH-Bedingungen, bevorzugt bei einem pH-Wert zwischen 2 und - 3, zum sauren Polykondensationsprodukt umgesetzt wird und **gekennzeichnet dadurch, dass** in einem zweiten Verfahrensschritt b) das so erhaltene saure Polykondensationsprodukt mit der Base Polyethylenimin vermischt wird.

7. Baustoffmischungen enthaltend Zusammensetzungen gemäß einem der Ansprüche 1 bis 5 und Bindemittel basierend auf Calciumsulfat und/oder (latent)hydraulischen Bindemitteln.

8. Verwendung der Zusammensetzungen gemäß einem der Ansprüche 1 bis 5 als Zusatzmittel, bevorzugt Fliessmittel, für wässrige Suspensionen von Bindemitteln basierend auf Calciumsulfat.

9. Verwendung der Zusammensetzungen gemäß einem der Ansprüche 1 bis 5 als Zusatzmittel, bevorzugt Fliessmittel, für wässrige Suspensionen von (latent)hydraulischen Bindemitteln.

## Claims

1. Composition containing a salt formed from an acid and from a base, wherein the acid is defined as a polycondensation product containing
(I) at least one structural unit including an aromatic or heteroaromatic and a polyether side chain, the structural units (I) is represented by the following general formula: 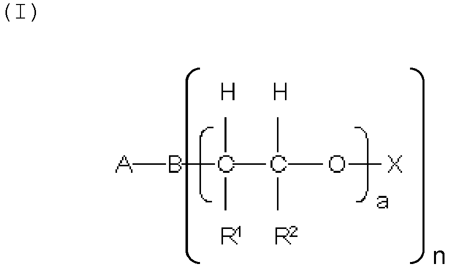 with
A identical or different and also represented by a substituted or unsubstituted aromatic or heteroaromatic compound with 5 to 10 carbon atoms, wherein the 5 to 10 carbon atoms are preferably in the aromatic ring system,
with
B identical or different and also represented by N, NH or O
with
n = 2 when B = N and n = 1 when B = NH or O
with
R¹ and R² each independently identical or different and also represented by a branched or unbranched C₁-to C₁₀-alkyl radical, C₅- to C₈-cycloalkyl radical, aryl radical, heteroaryl radical or H
with
a identical or different and also represented by an integer from 1 to 300
with X
identical or different and also represented by a branched or unbranched C₁- to C₁₀-alkyl radical, C₅-to C₈-cycloalkyl radical, aryl radical, heteroaryl radical or H
and
(II) at least one phosphated structural unit including an aromatic or heteroaromatic,
wherein the structural unit (II) is represented by the following general formula: 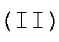 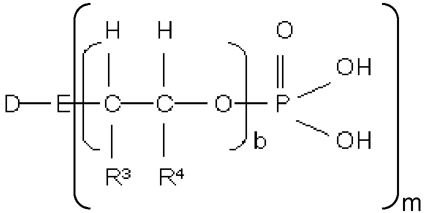 with
D identical or different and also represented by a substituted or unsubstituted aromatic or heteroaromatic compound with 5 to 10 carbon atoms, wherein the 5 to 10 carbon atoms are preferably in the aromatic ring system,
with
E identical or different and also represented by N, NH or O
with
m = 2 when E = N and m = 1 when E = NH or O
with
R³ and R⁴ each independently identical or different and also represented by a branched or unbranched C₁-to C₁₀-alkyl radical, C₅- to C₈-cycloalkyl radical, aryl radical, heteroaryl radical or H
with b
identical or different and also represented by an integer from 0 to 300,
the acid contains a further structural unit (III) which is represented by the following formula: 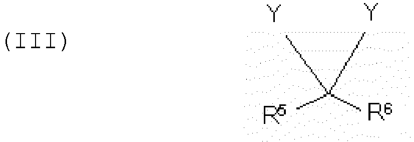 with
Y each independently identical or different and represented by (I), (II), or further constituents of the polycondensation product
with
R⁵ identical or different and represented by H, CH₃, COOH or a substituted or unsubstituted aromatic or heteroaromatic compound with 5 to 10 carbon atoms wherein the 5 to 10 carbon atoms are preferably in the aromatic ring system,
with
R⁶ identical or different and represented by H, CH₃, COOH or a substituted or unsubstituted aromatic or heteroaromatic compound with 5 to 10 carbon atoms wherein the 5 to 10 carbon atoms are preferably in the aromatic ring system,
wherein the molar ratio of structural units [(I) + (II)] : (III) is 1:0.8 to 3,
the molar ratio of structural units (I) : (II) is in the range from 1:10 to 10:1;
and
polyethyleneimine as base, wherein the molar mass of the polyethyleneimine is greater than 500 daltons and the mass ratio of the acetic polycondensation product to the base polyethyleneimine is in the range from 1:1 to 1000:1.

2. Composition according to Claim 1, **characterized in that** R⁵ and R⁶ in structural unit (III) are each independently represented, identically or differently, by H, COOH and/or methyl.

3. Composition according to either of Claims 1 and 2, **characterized in that** 2% to 90% by weight of water and 98% to 10% by weight of dissolved dry matter are included.

4. Composition according to any one of Claims 1 to 3, **characterized in that** the molar mass of the base polyethyleneimine is in the range from 800 to 30 000 and preferably from 1200 to 26 000 g/mol.

5. Composition according to any one of Claims 1 to 4, **characterized in that** in addition to the base polyethyleneimine still further bases can be present, in which case the proportion of the bases which is accounted for by the polyethyleneimine is greater than 25% by weight and preferably greater than 50% by weight.

6. Process for producing a composition according to any one of Claims 1 to 5, which process comprises a first process step a) of a reaction mixture containing at least
(Ia) a monomer including a polyether side chain and an aromatic or heteroaromatic,
(IIa) at least one phosphated monomer including an aromatic or heteroaromatic, and
(IIIa) at least one keto compound as monomer of the general structural formula 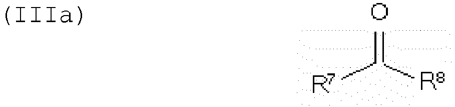 with
R⁷ is identical or different and represented by H, CH₃, COOH or a substituted or unsubstituted aromatic or heteroaromatic compound with 5 to 10 carbon atoms wherein the 5 to 10 carbon atoms are preferably in the aromatic ring system, with R⁸ is identical or different and represented by H, CH₃, COOH or a substituted or unsubstituted aromatic or heteroaromatic compound with 5 to 10 carbon atoms wherein the 5 to 10 carbon atoms are preferably in the aromatic ring system,
being reacted under acidic pH conditions, preferably at a pH between 2 and -3, to form the acidic polycondensation product, and is **characterized in that**, in a second process step b), the acidic polycondensation product thus obtained is mixed with the base polyethyleneimine.

7. Building product mixtures containing compositions according to any one of Claims 1 to 5 and binders based on calcium sulphate and/or (latently) hydraulic binders.

8. Use of compositions according to any one of Claims 1 to 5 as admixture agents, preferably flow agents, for aqueous suspensions of binders based on calcium sulphate.

9. Use of compositions according to any one of Claims 1 to 5 as admixture agents, preferably flow agents for aqueous suspensions of (latently) hydraulic binders.

## Revendications

1. Composition contenant un sel d'un acide d'une base, l'acide étant défini comme un
produit de polycondensation contenant
(I) au moins une unité structurale présentant un aromatique ou un hétéroaromatique et une chaîne latérale polyéther, les unités structurales (I) étant représentées par la formule générale suivante 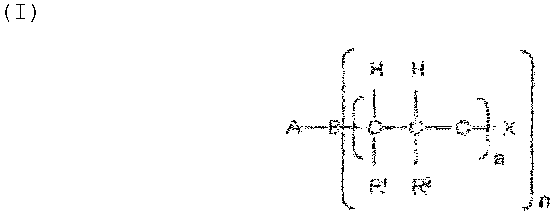 dans laquelle
A est identique ou différent et représente un composé aromatique ou hétéroaromatique, substitué ou non substitué comprenant 5 à 10 atomes de carbone, les 5 à 10 atomes de carbone se trouvant de préférence dans le système cyclique aromatique,
dans laquelle
B identique ou différent et représente N, NH ou O dans laquelle
n = 2 si B = N et n = 1 si B = NH ou O
dans laquelle
R¹ et R² sont, indépendamment l'un de l'autre, identiques ou différents et représentent un radical C₁-C₁₀-alkyle ramifié ou non ramifié, un radical C₅-C₈-cycloalkyle, un radical aryle, un radical hétéroaryle ou H dans laquelle
a est identique ou différent et représente un nombre entier de 1 à 300
dans laquelle
X est identique ou différent et représente un radical C₁-C₁₀-alkyle ramifié ou non ramifié, un radical C₅-C₈-cycloalkyle, un radical aryle, un radical hétéroaryle ou H
et
(II) au moins une unité structurale phosphatée, présentant un aromatique ou un hétéroaromatique, l'unité structurale (II) étant représentée par la formule générale suivante 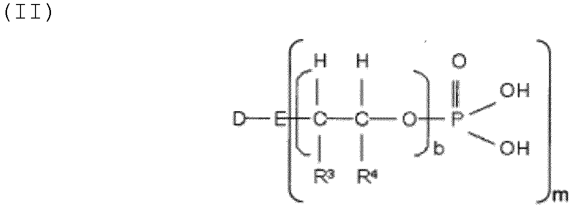 dans laquelle
D est identique ou différent et représente un composé aromatique ou hétéroaromatique, substitué ou non substitué comprenant 5 à 10 atomes de carbone, les 5 à 10 atomes de carbone se trouvant de préférence dans le système cyclique aromatique,
dans laquelle
E est identique ou différent et représente N, NH ou O dans laquelle
m = 2 si E = N et m = 1 si E = NH ou O
dans laquelle
R³ et R⁴ sont, indépendamment l'un de l'autre, identiques ou différents et représentent un radical C₁-C₁₀-alkyle ramifié ou non ramifié, un radical C₅-C₈-cycloalkyle, un radical aryle, un radical hétéroaryle ou H
dans laquelle
b est identique ou différent et représente un nombre entier de 0 à 300
l'acide contenant une autre unité structurale (III), qui est représentée par la formule générale suivante 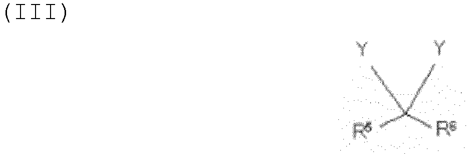 dans laquelle
Y est, indépendamment l'un de l'autre, identique ou différent et représente (I), (II) ou d'autres constituants du produit de polycondensation dans laquelle
R⁵ est identique ou différent et représente H, CH₃, COOH ou un composé aromatique ou hétéroaromatique, substitué ou non substitué comprenant 5 à 10 atomes de carbone, les 5 à 10 atomes de carbone se trouvant de préférence dans le système cyclique aromatique,
dans laquelle
R⁶ est identique ou différent et représente H, CH₃, COOH ou un composé aromatique ou hétéroaromatique, substitué ou non substitué comprenant 5 à 10 atomes de carbone, les 5 à 10 atomes de carbone se trouvant de préférence dans le système cyclique aromatique,
le rapport molaire des unités structurales [(I)+(II)]:(III) valant 1:0,8 à 3, le rapport molaire des unités structurales (I):(II) valant 1:10 à 10:1;
et
une polyéthylène-imine comme base, la masse molaire de la polyéthylène-imine étant supérieure à 500 daltons et le rapport massique du produit de polycondensation acide à la base polyéthylène-imine valant 1:1 à 1000:1.

2. Composition selon la revendication 1, **caractérisée en ce que** R⁵ et R⁶ dans l'unité structurale (III) sont, indépendamment l'un de l'autre, identiques ou différents et représentent H, COOH et/ou méthyle.

3. Composition selon l'une quelconque des revendications 1 ou 2, **caractérisée en ce qu'**elle contient 2 à 90% en poids d'eau et 98 à 10% en poids de masse sèche dissoute.

4. Composition selon l'une quelconque des revendications 1 à 3, **caractérisée en ce que** la masse molaire de la base polyéthylène-imine est de 800 à 30.000, de préférence de 1200 à 26.000 g/mole.

5. Composition selon l'une quelconque des revendications 1 à 4, **caractérisée en ce que** d'autres bases peuvent encore être présentes à côté de la base polyéthylène-imine, la proportion de la polyéthylène-imine par rapport aux bases étant de préférence supérieure à 25% en poids, de préférence supérieure à 50% en poids.

6. Procédé pour la préparation d'une composition selon l'une quelconque des revendications 1 à 5, où, dans une première étape de procédé a), un mélange réactionnel contenant au moins
(Ia) un monomère présentant une chaîne latérale polyéther et un aromatique ou un hétéroaromatique,
(IIa) au moins un monomère phosphaté présentant un aromatique ou un hétéroaromatique et
(IIIa) au moins un composé céto comme monomère de formule structurale générale 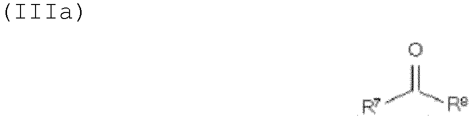 dans laquelle
R⁷ est identique ou différent et représente H, CH₃, COOH et/ou un composé aromatique ou hétéroaromatique, substitué ou non substitué comprenant 5 à 10 atomes de carbone, les 5 à 10 atomes de carbone se trouvant de préférence dans le système cyclique aromatique,
R⁸ est identique ou différent et représente H, CH₃, COOH et/ou un composé aromatique ou hétéroaromatique, substitué ou non substitué comprenant 5 à 10 atomes de carbone, les 5 à 10 atomes de carbone se trouvant de préférence dans le système cyclique aromatique,
est transformé dans des conditions de pH acide, de préférence à un pH entre 2 et -3, en un produit de polycondensation acide et **caractérisé en ce que**, dans une deuxième étape de procédé b), le produit de polycondensation acide ainsi obtenu est mélangé avec la base polyéthylène-imine.

7. Mélanges de matériau de construction contenant des compositions selon l'une quelconque des revendications 1 à 5 et des liants à base de sulfate de calcium et/ou des liants hydrauliques (latents).

8. Utilisation des compositions selon l'une quelconque des revendications 1 à 5 comme additif, de préférence comme fluidifiant, pour des suspensions aqueuses de liants à base de sulfate de calcium.

9. Utilisation des compositions selon l'une quelconque des revendications 1 à 5 comme additif, de préférence comme fluidifiant, pour des suspensions aqueuses de liants hydrauliques (latents).
